# EUROPEAN PATENT APPLICATION

(11) **EP 4 749 709 A1**
(43) Date of publication of application: **27.05.2026**
(21) Application number: 24943418.4
(22) Date of filing: 13.06.2024
(51) Int. Cl.: H01M 4/139

(54) **RECHARGEABLE BATTERY, METHOD FOR MANUFACTURING RECHARGEABLE BATTERY, AND METHOD FOR MANUFACTURING ELECTRODE FOR RECHARGEABLE BATTERY**

(71) Applicant: Nash Energy (I) Private Limited, Bangalore, Karnataka 560022 (IN); Nash Energy Japan G.K., Hanamaki-shi, Iwate 025-0312 (JP)
(72) Inventor: HORIGOME, Masataka, Hanamaki-shi Chintai Plant, 6-38, 5th-Chiwari, Nimaibashi, Hanamaki-Shi, Iwate 025-0312 (JP)
(74) Representative: Plougmann Vingtoft a/s
(86) International application number: PCT/JP2024/021427
(87) International publication number: WO 2025/258004

(57) **Abstract**

According to the present invention, a rechargeable battery, a method for manufacturing the rechargeable battery, and a method for manufacturing an electrode for the rechargeable battery are provided with: a step for forming electrode slurry that includes an electrode active material, amorphous carbon or a carbon fiber, a thickener, and a binder; a step for applying the electrode slurry to a substrate and then drying the same, thereby forming an electrode coating film on the surface of the substrate; and a step for superposing the substrate having the electrode coating film formed on the surface thereof onto one surface of perforated metal foil including a plurality of through-holes, and then applying a pressure thereto, thereby transferring the electrode coating film to the perforated metal foil.

## Description

### TECHNICAL FIELD

The present invention relates to a rechargeable battery, a method for manufacturing the rechargeable battery, and a method for manufacturing an electrode of the rechargeable battery.

### BACKGROUND OF THE INVENTION

Rechargeable batteries are known for their high energy density, rapid charge and discharge capabilities, and long expected lifespan. For example, it is also known that lithium ion batteries can be constructed using various materials, such as ternary lithium ion batteries that utilize nickel, manganese, and cobalt as cathode material, and lithium iron phosphate ion batteries that utilize lithium iron phosphate (LFP: LiFePO₄) as the cathode material (for example, see Patent Document 1).

### PRIOR ART

### PATENT DOCUMENT

[Patent Document 1] Japanese Unexamined Patent Application Publication No. 2017-212045

### SUMMARY OF INVENTION

### PROBLEMS TO BE SOLVED BY THE INVENTION

As a method for further increasing the energy density of such rechargeable batteries, increasing the capacity of rechargeable batteries and reducing their weight can be considered. Increasing the capacity of the rechargeable batteries is effectively achieved by forming a thick coating of the electrode material; however, the physical strength of the electrode may be reduced. Reducing the weight of the rechargeable batteries is effectively achieved by making the components thinner; however, in the manufacturing process, there were cases where the components broke or wrinkles were formed, resulting in deterioration of productivity. Therefore, it is conceivable to use a perforated metal foil having through-holes. However, because the electrode material leaks through the through-holes when it is coated onto the perforated metal foil, it has been difficult to form the electrode using the perforated metal foil.

The present invention has been made in view of these points, and its object is to make it possible to easily manufacture an electrode of a rechargeable battery using a perforated metal foil.

### MEANS FOR SOLVING THE PROBLEM

A first aspect of the present invention provides a method for manufacturing an electrode of a rechargeable battery, the method including the steps of: forming an electrode slurry that includes (i) an electrode active material, (ii) amorphous carbon or carbon fibers, (iii) a thickener, and (iv) a binder; forming an electrode coating film on a surface of a substrate by applying the electrode slurry to the substrate and drying the electrode slurry; and transferring the electrode coating film onto a perforated metal foil having a plurality of through-holes by stacking the substrate having the electrode coating film formed on the surface thereof onto one surface of the perforated metal foil and applying pressure thereto.

The thickener may be 1 wt % or less of carboxymethyl cellulose (CMC). The binder may be 1 wt % or less of styrene-butadiene rubber (SBR).

The forming the electrode coating film on the surface of the substrate may include: providing two substrates; and forming the electrode coating film on surfaces of the two substrates by applying the electrode slurry to the respective substrates and drying the electrode slurry, and the transferring the electrode coating film onto the perforated metal foil may include: transferring two electrode coating films onto both surfaces of the perforated metal foil by stacking the two substrates, each having the electrode coating film formed on the surface thereof, onto both one surface and the other surface of the perforated metal foil having a plurality of through-holes formed therein, and applying pressure.

The transferring the electrode coating film onto the perforated metal foil may include: transferring the electrode coating film onto the perforated metal foil by a calendar press that applies pressure by passing the substrate and the perforated metal foil stacked together between metal rollers.

A second aspect of the present invention provides a method for manufacturing a rechargeable battery including the steps of: forming a cathode that includes (i) a cathode active material and (ii) amorphous carbon or carbon fibers; forming an anode that includes (i) an anode active material and (ii) amorphous carbon or carbon fibers; and enclosing the cathode, the anode, and a predetermined electrolyte in a predetermined container and hermetically sealing the container, wherein at least one of the forming the cathode or the forming the anode includes each step of the method for manufacturing the electrode of the rechargeable battery according to the first aspect of the invention.

A third aspect of the present invention provides a rechargeable battery including: a cathode that includes a cathode material containing (i) a cathode active material and (ii) amorphous carbon or carbon fibers; an anode that includes an anode material containing (i) an anode active material and (ii) amorphous carbon or carbon fibers; and an electrolyte, wherein at least one of the cathode or the anode further includes a perforated metal foil having a plurality of through-holes, and the cathode material or the anode material covers at least one surface of the perforated metal foil while filling a plurality of through-holes of the perforated metal foil.

### EFFECT OF THE INVENTION

According to the present invention, it is possible to easily manufacture an electrode of a rechargeable battery using a perforated metal foil.

### BRIEF DESCRIPTION OF THE DRAWINGS

FIG. 1 shows an example of a schematic configuration of a lithium iron phosphate ion battery 10 according to the present embodiment.
FIG. 2 shows an example of a perforated metal foil 5 according to the present embodiment.
FIG. 3 shows an example of a manufacturing flow of the lithium iron phosphate ion battery 10 according to the present embodiment.
FIG. 4 shows an example in which an electrode coating film is transferred onto the perforated metal foil 5 according to the present embodiment.
FIG. 5 shows a configuration example of the lithium iron phosphate ion battery 10 according to the present embodiment.
FIG. 6 shows an example of an assembly flow of the lithium iron phosphate ion battery 10 according to the present embodiment.
FIG. 7 shows an example of charge-discharge characteristics of the lithium iron phosphate ion battery 10 according to the present embodiment.
FIG. 8 shows an example of the charge-discharge cycle characteristics of the lithium iron phosphate ion battery 10 according to the present embodiment.

### DETAILED DESCRIPTION OF THE INVENTION

### <Schematic configuration of a lithium iron phosphate ion battery 10>

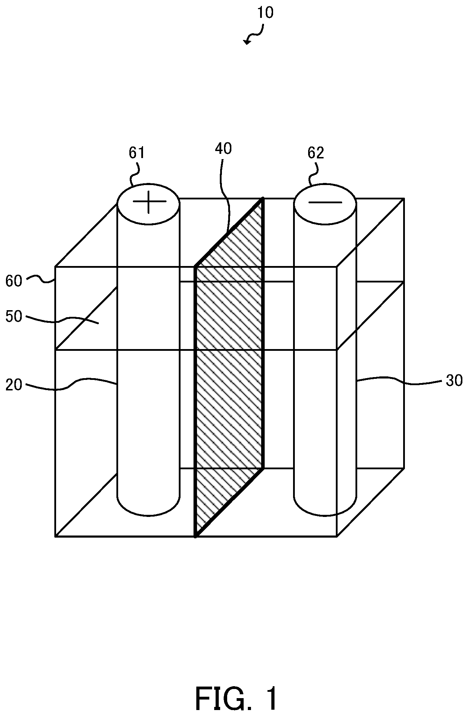

In this example, a lithium iron phosphate ion battery will be described as an example of a rechargeable battery. FIG. 1 shows an example of a schematic configuration of a lithium iron phosphate ion battery 10 according to the present embodiment. The lithium iron phosphate ion battery 10 is a rechargeable secondary battery. The lithium iron phosphate ion battery 10 includes a cathode 20, an anode 30, a separator 40, an electrolyte 50, and a housing 60.

The cathode 20 includes lithium, iron, phosphorus, and a conductive material. The active material of the cathode 20 is lithium iron phosphate. The cathode 20 is an electrode formed of, for example, lithium iron phosphate, amorphous carbon, and a binder, as cathode material. Here, amorphous carbon is a conductive additive such as Ketjenblack or acetylene black. The amorphous carbon may be carbon fibers. The conductive additive is a material used to reduce the resistance of the electrode when the electrode of the lithium ion battery is formed. The binder is PVDF (Poly Vinylidene Difluoride), SBR (Styrene-Butadiene Rubber), or the like.

The anode 30 includes graphite and a conductive material. The active material of the anode 30 is graphite. The anode 30 is an electrode formed of, for example, amorphous carbon, a thickener such as CMC (Carboxymethyl Cellulose), or a binder, as an anode material. The amorphous carbon may be carbon fibers. Examples of the binder include PVDF (Poly Vinylidene Difluoride) and SBR (Styrene-Butadiene Rubber).

The separator 40 allows lithium ions to move between the cathode 20 and the anode 30 while separating the cathode 20 and the anode 30. The separator 40 is, for example, a film having a thickness of about several ten µm and having a plurality of through holes of 1 µm or less. The separator 40 is formed of, for example, polyethylene, polypropylene, or the like.

The electrolyte 50 ionizes lithium into cations and anions, allowing ions to migrate. The electrolyte 50 is a solvent, a solution, a gel-like substance, or the like. The electrolyte 50 is, for example, an organic electrolytic solution in which approximately 1 mol of a lithium salt (LiPF₆, LiBF₄, LiClO₄, or the like) is dissolved in an organic solvent. Examples of the materials of the organic solvent include ethylene carbonate (EC), propylene carbonate (PC), dimethyl carbonate (DMC), diethyl carbonate (DEC), and ethyl methyl carbonate (EMC).

The housing 60 contains the cathode 20, the anode 30, the separator 40, and the electrolyte 50. The housing 60 is preferably a container that hermetically seals the cathode 20, the anode 30, the separator 40, and the electrolyte 50. The housing 60 includes a positive terminal 61 electrically connected to the cathode 20 and a negative terminal 62 electrically connected to the anode 30.

The lithium iron phosphate ion battery 10 is charged when a power source is connected to the positive terminal 61 and the negative terminal 62. When the lithium iron phosphate ion battery 10 is charged, electrons migrate from the cathode 20 to the anode 30, and lithium ions migrate through the electrolyte 50 from the cathode 20 and are accumulated in the anode 30, thereby generating a potential difference between the cathode 20 and the anode 30.

On the other hand, the lithium iron phosphate ion battery 10 discharges when a discharge circuit, such as a load, is connected to the positive terminal 61 and the negative terminal 62. When the lithium iron phosphate ion battery 10 is discharged, electrons flow from the anode 30 to the cathode 20 through the discharge circuit, and the lithium ions that had been accumulated in the anode 30 migrate to the cathode 20 through the electrolyte 50, and combine with the electrons in the cathode 20 to be reduced to lithium oxide.

In the lithium iron phosphate ion battery 10 according to the present embodiment, a perforated metal foil is used as the electrode material of at least one of the cathode 20 or the anode 30. The perforated metal foil is a metal foil in which a plurality of through-holes are formed, and is a material capable of reducing the weight of the metal foil while maintaining strength. The metal foil is a copper foil, an aluminum foil, or the like.

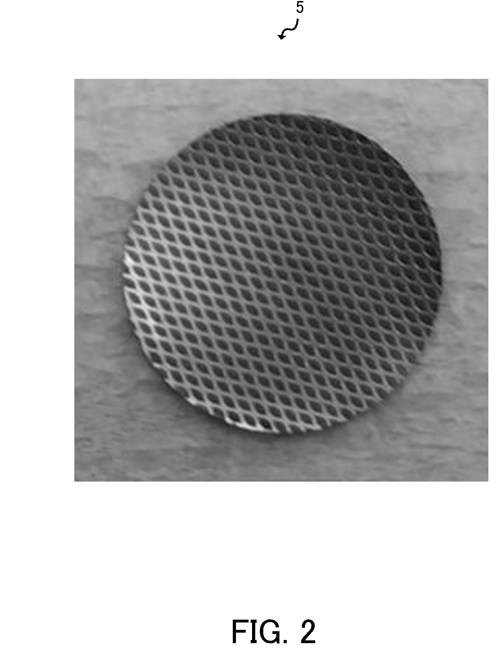

FIG. 2 shows an example of a perforated metal foil 5 according to the present embodiment. The perforated metal foil 5 may have a plurality of through-holes having the same shape, or may instead have a plurality of through-holes having different shapes. In addition, the perforated metal foil 5 may have polygonal through-holes formed in a net shape. It is preferable that the through-holes of the perforated metal foil 5 are formed in a complicated shape so that the electrode material can readily enter and be retained therein. In addition, the metal portion of the perforated metal foil 5 may be formed by weaving metal wires together.

The conventional method for manufacturing an electrode involved coating an electrode material onto a metal foil. However, when the perforated metal foil 5 is used, the electrode material leaks through the through-holes when the electrode material is coated onto one surface thereof, and therefore it has been difficult to form an electrode by the conventional manufacturing method. It is also conceivable to coat the electrode material on both surfaces of the perforated metal foil 5. However, when the perforated metal foil 5 is conveyed after the electrode material has been coated, part of the coated electrode material flows off, and thus it has been difficult to form the electrode even when coating the electrode material on both surfaces.

Therefore, in the method for manufacturing the electrode according to the present embodiment, the electrode material is formed on the perforated metal foil 5 by transferring the electrode material onto the perforated metal foil 5. As described above, the inventors have found a manufacturing method of easily forming an electrode having a reduced weight by using the perforated metal foil 5. Such a method can suppress a reduction in physical strength of the electrode and can reduce the occurrences of breakage, wrinkle formation, and hole formation in the components during the manufacturing process. Accordingly, the method for manufacturing the electrode found by the inventors will be described below by taking the lithium iron phosphate ion battery 10 as an example.

### <Manufacturing flow of the lithium iron phosphate ion battery 10>

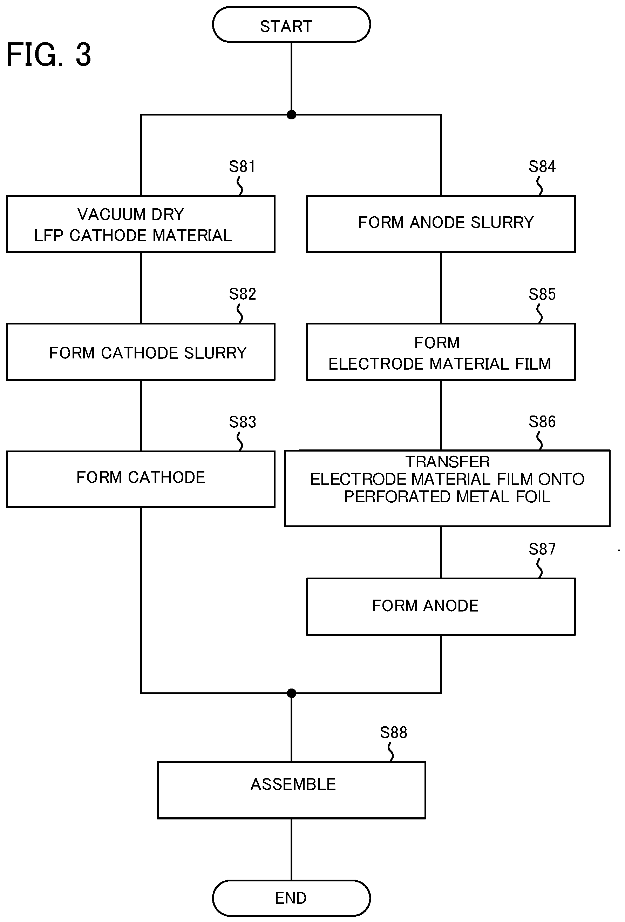

FIG. 3 shows an example of a manufacturing flow of the lithium iron phosphate ion battery 10 according to the present embodiment. In the lithium iron phosphate ion battery 10 according to the present embodiment, an example in which the perforated metal foil 5 is used as the anode 30 will be described. In the present embodiment, a manufacturing flow of a coin-type battery having a diameter of about 14 mm will be described as an example of the lithium iron phosphate ion battery 10.

First, a cathode 20 and an anode 30 are formed. The cathode 20 and the anode 30 are formed separately, for example. The cathode 20 and the anode 30 may be formed concurrently in time or may be formed at different times. For example, the anode 30 may be formed after the cathode 20, or alternatively, the cathode 20 may be formed after the anode 30. FIG. 3 shows an example in which the cathode 20 and the anode 30 are formed concurrently in time.

First, the formation of the cathode 20 including lithium, iron, phosphorus, and amorphous carbon will be described. As an example of the film composition of the cathode 20, the weight ratio of lithium iron phosphate, amorphous carbon, and PVDF is 91:4:5. The amorphous carbon of the cathode material may be another conductive material. For example, the amorphous carbon of the cathode material is carbon fiber.

More specifically, first, the LFP cathode material composed of lithium, iron, and phosphorus is vacuum dried (S81). For example, the LFP cathode material is placed in a vacuum chamber or the like, and dried by evacuating the chamber with a vacuum pump and then maintaining the material at a temperature of about 120°C for approximately eight hours.

Next, a cathode slurry is formed (S82) by adding the dried LFP cathode material and amorphous carbon to a solution in which PVDF has been dissolved in a solvent such as N-methyl pyrrolidone (NMP), and to which a dispersant has been added, and stirring the resulting mixture. The amount of the dispersant is, for example, about 2 wt% relative to the cathode material. Then, NMP is added to the cathode slurry and stirred so that the cathode slurry reaches a predetermined concentration. The predetermined concentration is, for example, a solid content of 45 wt%.

Next, the cathode 20 is formed (S83) by applying to a substrate a cathode slurry containing cathode material that includes lithium iron phosphate and amorphous carbon, and drying the cathode slurry. The substrate is, for example, aluminum foil whose surface is coated with graphite. The film thickness of the graphite is, for example, approximately 1 µm, and the thickness of the aluminum foil is approximately 15 µm. It is preferable to apply only the predetermined amount of the cathode slurry to the substrate so as to form a predetermined dry film thickness. The predetermined dry film thickness is, for example, approximately 80 µm. The cathode slurry is preferably applied by a slot die coater or the like.

The applied cathode slurry is dried, for example, in air at a temperature of approximately 130°C for about 15 minutes to form a coating film of the cathode material having a dry film thickness. Then, the coating film of the cathode material is pressed and formed to a predetermined thickness. The predetermined thickness is, for example, approximately 70 µm. The cathode 20 is formed by cutting the coating film of the cathode material, having such a predetermined thickness, into a predetermined shape.

Next, the formation of the anode 30 including graphite and amorphous carbon will be described. As an example of the film composition of the anode 30, the weight ratio of graphite, amorphous carbon, CMC, and SBR is 96.2:2.6:0.6:0.6. The amorphous carbon is carbon black, Ketjenblack, acetylene black, or the like. The amorphous carbon of the anode material may be another conductive material. For example, the amorphous carbon of the anode material is carbon fiber.

More specifically, first, an anode slurry is formed (S84). The anode slurry is an electrode slurry including (i) an electrode active material, (ii) amorphous carbon or carbon fibers, (iii) a thickener, and (iv) a binder. The thickener is, for example, 1 wt % or less of CMC. The binder is, for example, 1 wt % or less of SBR.

For example, a predetermined amount of graphite powder and a predetermined amount of amorphous carbon are added to an aqueous solution of CMC, and the resulting mixture is stirred. A predetermined amount of SBR solution is then added thereto and stirred to form the anode slurry. The aqueous solution of CMC contains, as one example, 2 wt% of CMC. Then, distilled water is added to the anode slurry and the resulting mixture is stirred so that the anode slurry reaches a predetermined concentration. The predetermined concentration is, for example, a solid content of 53 wt%. The anode slurry is a highly concentrated slurry having a higher concentration than the anode slurries used in conventional electrodes.

Next, an electrode coating film is formed on the surface of a substrate by applying the anode slurry to the substrate, and drying the anode slurry (S85). The substrate is, for example, a copper foil substrate having a thickness of approximately 10 µm. It is preferable to apply only the predetermined amount of the anode slurry to the substrate so as to form the electrode coating film having a predetermined dry film thickness. The predetermined dry film thickness is, for example, approximately 100 µm. The anode slurry is preferably applied by a slot die coater or the like. The applied anode slurry is dried, for example, in air at a temperature of approximately 80°C for about 10 minutes to form the electrode coating film.

Next, by stacking the substrate on which the electrode coating film is formed on its surface onto one surface of the perforated metal foil 5 having a plurality of through-holes and applying pressure, the electrode coating film is transferred onto the perforated metal foil 5 (S86). The perforated metal foil 5 is, for example, the perforated copper foil having an opening ratio of 58% and a thickness of 50 µm illustrated in FIG. 2. The stacked substrate and perforated metal foil 5 are pressed, for example, by a calendar press that applies pressure by passing an object to be pressed between two metal rollers.

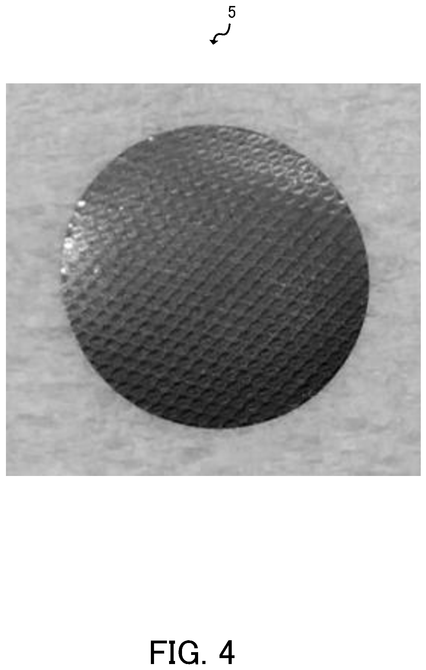

FIG. 4 shows an example in which the electrode coating film is transferred onto the perforated metal foil 5 according to the present embodiment. It was found that the electrode coating film can be easily transferred from the substrate to the perforated metal foil 5 by applying pressure with a press machine. FIG. 4 shows the result of performing the calendar press at room temperature under conditions in which the gap between the two metal rollers was 50 µm.

It should be noted that since there were cases where transfer could not be achieved when the gap was set to 100 µm, it is preferable that the gap be 40 µm or more and 80 µm or less. The gap may be 40 µm or more and 60 µm or less. In addition, since there were cases where transfer could not be achieved at a line pressure of approximately 400 kgf/cm in the calendar press, it is preferable that the linear pressure be 450 kgf/cm or higher, or 500 kgf/cm or higher.

The thickness of the anode material formed by transferring the electrode coating film to the perforated metal foil 5 is, for example, approximately 75 µm. The anode 30 is formed by cutting out such an anode material into a predetermined shape (S87).

After the cathode 20 and the anode 30 are formed, the cathode 20, the anode 30, and the predetermined electrolyte 50 are enclosed in a predetermined container, and the container is hermetically sealed to assemble the lithium iron phosphate ion battery 10 (S88). Thus, the lithium iron phosphate ion battery 10 can be formed.

### <Configuration example of the lithium iron phosphate ion battery 10>

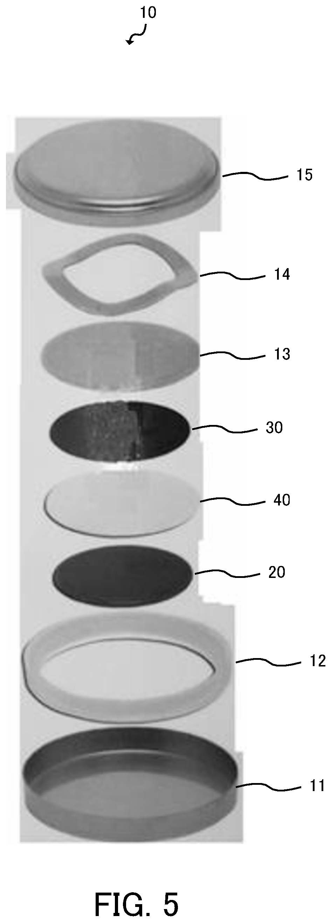

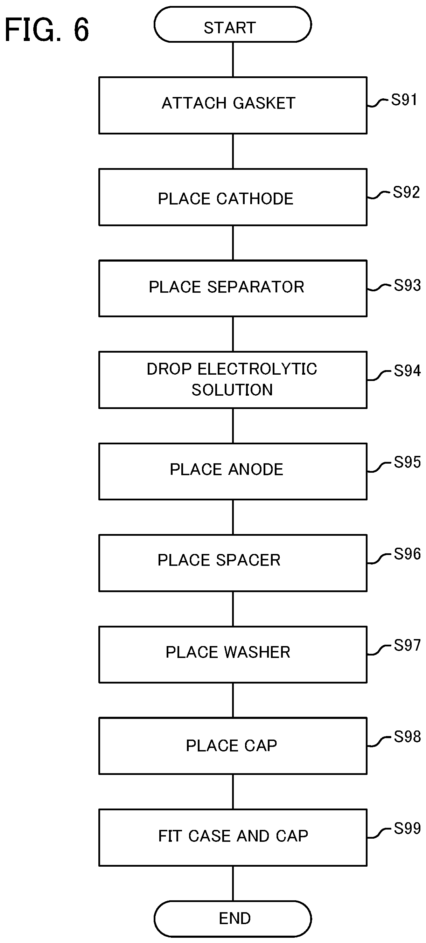

FIG. 5 shows a configuration example of the lithium iron phosphate ion battery 10 according to the present embodiment. FIG. 6 shows an example of an assembly flow of the lithium iron phosphate ion battery 10 according to the present embodiment. In other words, FIGS. 5 and 6 are diagrams illustrating, in detail, the operation of S88 of assembling the lithium iron phosphate ion battery 10 described in FIG. 4.

The lithium iron phosphate ion battery 10 further includes a case 11, a gasket 12, a spacer 13, a washer 14, and a cap 15. The housing 60 is formed by fitting together the case 11 and the cap 15. Before the lithium iron phosphate ion battery 10 is assembled, it is preferable that the cathode 20 and the anode 30 be dried using a vacuum chamber or the like. In this case, for example, the cathode 20 is dried at approximately 110°C for about 8 hours, and the anode 30 is dried at approximately 90°C for about 8 hours. The separator 40 is assumed to have been cut into a predetermined shape.

First, the gasket 12 is attached to the case 11 (S91). Next, the cathode 20 is placed in the case 11 (S92). Next, the separator 40 is placed on the cathode 20 in the case 11 (S93). The separator 40 is, for example, a polyolefin microporous membrane. Next, a predetermined amount of electrolytic solution is dropped onto the separator 40 in the case 11 by a pipette or the like (S94). The electrolytic solution is, for example, an organic electrolytic solution in which approximately 1 mol of a lithium salt (LiPF₆) is dissolved in EC, DMC, and EMC at a weight ratio of 1:1:1. It is preferable that the electrolytic solution be dropped in such that the cathode 20, the anode 30, and the separator 40 are sufficiently immersed in the electrolytic solution.

Next, the anode 30 is placed on the separator 40 containing the electrolytic solution (S95). Next, the spacer 13 is placed on the anode 30 in the case 11 (S96). Next, the washer 14 is placed on the spacer 13 in the case 11 (S97). Next, the cap 15 is placed on the gasket 12 attached to the case 11 (S98). Next, the cap 15 is pressed from above, and the case 11 and the cap 15 are fitted together via the gasket 12 (S99).

As a result, the lithium iron phosphate ion battery 10 can be assembled. It is preferable that the assembly operation of S91 to S99 be performed in an argon atmosphere or a dry atmosphere having a moisture dew point of -50°C or below. The characteristics of the lithium iron phosphate ion battery 10 formed as described above will be described.

### < Examples of characteristics of the lithium iron phosphate ion battery 10>

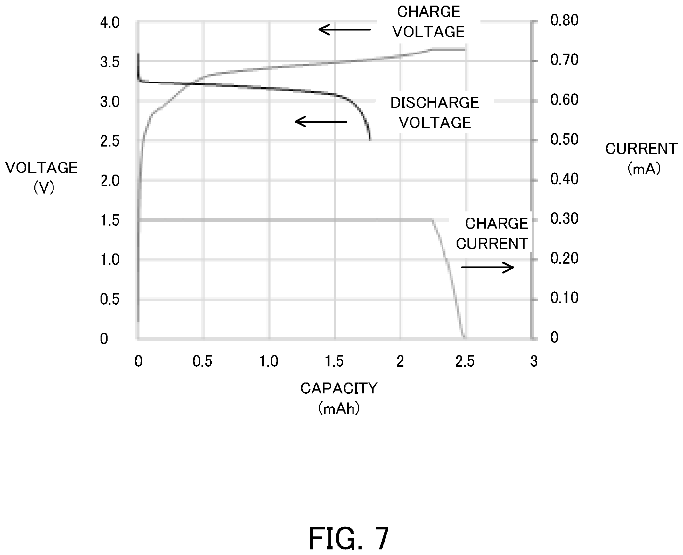

FIG. 7 shows an example of charge-discharge characteristics of the lithium iron phosphate ion battery 10 according to the present embodiment. FIG. 7 shows the charge-discharge characteristics of the lithium iron phosphate ion battery 10 manufactured by the manufacturing flow and assembly flow described with reference to FIGS. 4 to 6. In FIG. 7, the horizontal axis represents the capacity, and the vertical axis represents the voltage and the current. From FIG. 7, it can be seen that the charge voltage curve, the discharge voltage curve, and the charge current curve exhibited characteristics comparable to those of a conventional lithium iron phosphate ion battery.

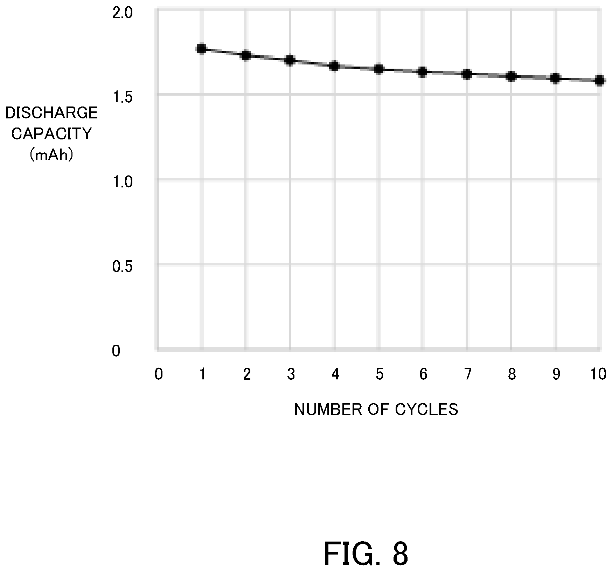

FIG. 8 shows an example of charge-discharge cycle characteristics of the lithium iron phosphate ion battery 10 according to the present embodiment. The charge-discharge cycle characteristics represent the results of plotting the discharge capacity and charge capacity at the end of each cycle, while repeating the charge-discharge cycle as shown in FIG. 7. From FIG. 8, it can be seen that there is no abrupt deterioration in the cycle characteristics, and that the lithium iron phosphate ion battery 10 sufficiently exhibits its function as a rechargeable battery.

From the above, it was found that the electrode of the lithium iron phosphate ion battery 10 can be easily manufactured using the perforated metal foil 5 according to the present embodiment. Therefore, it is possible to reduce the weight of the electrode while keeping the thickness of the electrode components comparable to the thickness of the conventional electrode components. In addition, the perforated metal foil 5 can reduce the occurrences of breakage, wrinkle formation, and hole formation in the components during the manufacturing process, and can maintain the physical strength of the electrode. Accordingly, the electrode using the perforated metal foil 5 allows the electrode material to be applied more thickly than in the conventional electrode, and enables an increase in the capacity of the rechargeable battery.

It should be noted that, in the conventional electrode, the solid content was approximately 45% in order to bring the slurry into close contact with the substrate. In contrast, when the perforated metal foil 5 is used, the higher the concentration of the slurry, the more readily the electrode coating film bites into the perforated metal foil 5. As a result, the solid content of the slurry can be increased to 50% or more. Accordingly, when the perforated metal foil 5 is used, it becomes possible to form an electrode having the same thickness as a conventional electrode while increasing the concentration of the electrode material, so that the energy density of the rechargeable battery can be made higher than that of the conventional electrode.

In the lithium iron phosphate ion battery 10 according to the present embodiment described above, an example has been provided in which the electrode coating film is transferred to one surface of the perforated metal foil 5, but the present embodiment is not limited thereto. Alternatively, the electrode coating film may be transferred to both surfaces of the perforated metal foil 5.

For example, in the step of S85 of FIG. 3, two substrates are provided, and by applying an electrode slurry to the two substrates and drying the electrode slurry, electrode coating films are formed on the surfaces of the respective substrates. Then, in the step of S86 of FIG. 3, by stacking the two substrates, each having the electrode coating film formed on its surface, onto both surfaces of the perforated metal foil 5, namely one surface and the other surface thereof, having the plurality of through-holes formed therein, and applying pressure, the two electrode coating films are transferred onto the respective surfaces of the perforated metal foil 5. As a result, the electrode having electrode coating films formed on both surfaces of the perforated metal foil 5 can be formed.

In the lithium iron phosphate ion battery 10 according to the present embodiment described above, an example has been provided in which the electrode using the perforated metal foil 5 is the anode 30, but the present embodiment is not limited thereto. In the lithium iron phosphate ion battery 10, the electrode using the perforated metal foil 5 may be the cathode 20. Furthermore, in the lithium iron phosphate ion battery 10, the electrode using the perforated metal foil 5 may be the cathode 20 and the anode 30.

The lithium iron phosphate ion battery 10 according to the present embodiment has been described above as an example involving the manufacture of the coin-type battery, but the present embodiment is not limited thereto. Other structures may be used, provided that the electrode using the perforated metal foil 5 is provided on at least one of a cathode or an anode.

The lithium iron phosphate ion battery 10 according to the present embodiment is an example of a rechargeable battery having the electrode using the perforated metal foil 5, and the rechargeable battery is not limited to the lithium iron phosphate ion battery 10. The electrode using the perforated metal foil 5 can be applied as electrodes of rechargeable batteries such as ternary lithium ion batteries that utilize nickel, manganese, and cobalt as cathode material, and rechargeable batteries that can be constructed using various materials.

Such a rechargeable battery includes: the cathode 20 having a cathode material containing (i) a cathode active material and (ii) amorphous carbon or carbon fibers; the anode 30 having an anode material containing (i) an anode active material and (ii) amorphous carbon or carbon fibers; and the electrolyte 50. At least one of the cathode 20 or the anode 30 further includes the perforated metal foil 5 having the plurality of through-holes. Here, the cathode material or the anode material covers at least one surface of the perforated metal foil 5 while filling the plurality of through-holes of the perforated metal foil 5.

The present disclosure is explained based on the exemplary embodiments. The technical scope of the present disclosure is not limited to the scope explained in the above embodiments and it is possible to make various changes and modifications within the scope of the disclosure. For example, all or part of the apparatus can be configured with any unit which is functionally or physically dispersed or integrated. Further, new exemplary embodiments generated by arbitrary combinations of them are included in the exemplary embodiments. Further, effects of the new exemplary embodiments brought by the combinations also have the effects of the original exemplary embodiments.

### [Description of symbols]

5 Perforated metal foil
10 Lithium iron phosphate ion battery
11 Case
12 Gasket
13 Spacer
14 Washer
15 Cap
20 Cathode
30 Anode
40 Separator
50 Electrolyte
60 Housing
61 Positive terminal
62 Negative terminal

## Claims

1. A method for manufacturing an electrode of a rechargeable battery, the method comprising the steps of:
forming an electrode slurry that includes (i) an electrode active material, (ii) amorphous carbon or carbon fibers, (iii) a thickener, and (iv) a binder;
forming an electrode coating film on a surface of a substrate by applying the electrode slurry to the substrate and drying the electrode slurry; and
transferring the electrode coating film onto a perforated metal foil having a plurality of through-holes by stacking the substrate having the electrode coating film formed on the surface thereof onto one surface of the perforated metal foil and applying pressure thereto.

2. The method for manufacturing the electrode of the rechargeable battery according to claim 1, wherein the thickener is 1 wt % or less of carboxymethyl cellulose (CMC).

3. The method for manufacturing the electrode of the rechargeable battery according to claim 1, wherein the binder is 1 wt % or less of styrene-butadiene rubber (SBR).

4. The method for manufacturing the electrode of the rechargeable battery according to claim 1, wherein the forming the electrode coating film on the surface of the substrate includes: providing two substrates; and forming the electrode coating film on surfaces of the two substrates by applying the electrode slurry to the respective substrates and drying the electrode slurry, and
the transferring the electrode coating film onto the perforated metal foil includes: transferring two electrode coating films onto both surfaces of the perforated metal foil by stacking the two substrates, each having the electrode coating film formed on the surface thereof, onto both one surface and the other surface of the perforated metal foil having a plurality of through-holes formed therein, and applying pressure.

5. The method for manufacturing the electrode of the rechargeable battery according to claim 1, wherein the transferring the electrode coating film onto the perforated metal foil includes: transferring the electrode coating film onto the perforated metal foil by a calendar press that applies pressure by passing the substrate and the perforated metal foil stacked together between metal rollers.

6. A method for manufacturing a rechargeable battery comprising the steps of:
forming a cathode that includes (i) a cathode active material and (ii) amorphous carbon or carbon fibers;
forming an anode that includes (i) an anode active material and (ii) amorphous carbon or carbon fibers; and
enclosing the cathode, the anode, and a predetermined electrolyte in a predetermined container and hermetically sealing the container, wherein at least one of the forming the cathode or the forming the anode includes each step of the method for manufacturing the electrode of the rechargeable battery according to any one of claims 1 to 5.

7. A rechargeable battery comprising:
a cathode that includes a cathode material containing (i) a cathode active material and (ii) amorphous carbon or carbon fibers;
an anode that includes an anode material containing (i) an anode active material and (ii) amorphous carbon or carbon fibers; and
an electrolyte, wherein at least one of the cathode or the anode further includes a perforated metal foil having a plurality of through-holes, and
the cathode material or the anode material covers at least one surface of the perforated metal foil while filling a plurality of through-holes of the perforated metal foil.
